# EUROPÄISCHE PATENTSCHRIFT

(11) **EP 3 236 557 B1**
(45) Veröffentlichungstag und Bekanntmachung des Hinweises auf die Patenterteilung: **07.04.2021**
(21) Anmeldenummer: 17166554.0
(22) Anmeldetag: 13.04.2017
(51) Int. Cl.: H02J 7/00, H01M 10/42, H01M 10/44, H01M 10/48, G01R 31/36

(54) **ENERGIESPEICHERSYSTEM**
ENERGY STORAGE SYSTEM
SYSTÈME DE STOCKAGE D'ÉNERGIE

(30) Priorität: 21.04.2016 DE 102016107448
(43) Veröffentlichungstag der Anmeldung: 25.10.2017
(73) Patentinhaber: enfas GmbH, 86668 Karlshuld (DE)
(72) Erfinder: LANGE, Falk, 81549 München (DE)
(74) Vertreter: Manitz Finsterwald Patent- und Rechtsanwaltspartnerschaft mbB

(56) Entgegenhaltungen:
- EP-A1- 2 536 001
- EP-A1- 2 675 001
- CN-U- 203 377 654
- US-A1- 2005 017 270
- US-A1- 2008 136 377
- US-A1- 2011 078 470
- US-A1- 2013 113 280
- US-A1- 2013 229 152
- US-A1- 2013 302 657
- US-A1- 2014 210 415
- US-B1- 6 229 283

## Beschreibung

Die vorliegende Erfindung betrifft ein Energiespeichersystem zur wiederholten Aufnahme, Speicherung und Abgabe elektrischer Energie. Das Energiespeichersystem umfasst eine Steuereinheit und einen Energiespeicher mit einer Vielzahl von elektrischen Speicherzellen, welche in Speichermodule gegliedert sind. Die Steuereinheit ist ausgestaltet, den Ladezustand zumindest eines Teils der Speicherzellen separat zu ermitteln.

Solche Energiespeichersysteme sind grundsätzlich bekannt und werden beispielsweise dazu eingesetzt, von Photovoltaikanlagen erzeugte elektrische Energie zwischen zu speichern und bei Bedarf wieder abzugeben. Insbesondere können solche Energiespeichersysteme hierbei verwendet werden, wenn kein Anschluss an ein reguläres Stromnetz vorhanden ist (Inselsystem).

Auch beim Vorhandensein eines regulären Stromnetzes können Energiespeichersysteme dazu dienen, überschüssige elektrische Energie des Stromnetzes aufzunehmen und in Zeiten großen Strombedarfs wieder abzugeben.

Zur Speicherung der elektrischen Energie sind bei den gattungsgemäßen Energiespeichersystemen elektrische Speicherzellen vorgesehen, bei denen es sich beispielsweise um Lithium-Ionen-Zellen handeln kann. Die Speicherzellen können jeweils in Speichermodule gegliedert sein, die beispielsweise 10 oder 15 parallel oder in Reihe geschaltete und mechanisch gekoppelte Speicherzellen umfassen. Elektrisch können die Speicherzellen z.B. mittels elektrischer Leiter aber auch induktiv mittels Spulen gekoppelt sein.

Aufgrund von Verschleiß kann der Fall eintreten, dass einzelne Speicherzellen des Energiespeichers ausgetauscht werden müssen.

Ein Energiespeichersystem, welches die Anpassung des Ladezustands der vorhandenen Speicherzellen ermöglicht, ist aus der EP 2 675 001 A1 bekannt. Überdies ist das Energiespeichersystem der EP 2 675 001 A1 in der Lage, zu erkennen, ob eine Speicherzelle ausgetauscht werden soll und ob die Speicherzelle durch eine neue Speicherzelle ersetzt wurde. Weitere Energiespeichersysteme, bei welchen ein Austausch von Speicherzellen möglich ist, sind in der US 2013/0302657 A1, der US 2013/0229152 A1, der EP 2 536 001 A1 und der US 2011/0078470 A1 beschrieben.

Die US 2014/210415 A1 und die US 2013/113280 A1 beschreiben ein passives Balancing.

Es ist die der Erfindung zugrunde liegende Aufgabe, ein Energiespeichersystem anzugeben, welches einen optimierten Betrieb des Energiespeichersystems beim Austausch von Speicherzellen im laufenden Betrieb gestattet.

Diese Aufgabe wird erfindungsgemäß durch ein Energiespeichersystem gemäß Anspruch1 gelöst. Der Anspruch 1 umfasst unter anderem die Merkmale, dass die Steuereinheit ausgebildet ist,
- zu erkennen, ob zumindest eine Speicherzelle entnommen werden soll,
- nach dem Erkennen, dass zumindest eine Speicherzelle entnommen werden soll, die zu entnehmende Speicherzelle elektrisch von den übrigen Speicherzellen zu trennen,
- zu erkennen, ob die getrennte Speicherzelle durch eine neue Speicherzelle ersetzt wurde, und
- die neue Speicherzelle elektrisch mit den übrigen Speicherzellen zu verbinden.

Insbesondere wird es durch das Erkennen, dass zumindest eine Speicherzelle entnommen werden soll und das darauffolgende Abschalten der Speicherzelle ermöglicht, Speicherzellen im laufenden Betrieb zu entnehmen, da bevorzugt nur die zu entnehmende Speicherzelle (oder z.B. deren Speichermodul) abgeschaltet wird.

Nachdem die neu eingesetzte Speicherzelle erst dann mit den übrigen Speicherzellen verbunden wird, wenn erkannt worden ist, dass die getrennte Speicherzelle (oder die getrennten Speicherzellen) durch eine neue Speicherzelle ersetzt wurde, kann die neue Speicherzelle nahtlos in den Betrieb des Energiespeichersystems eingebunden werden. Bei der getrennten Speicherzelle kann es sich um die zu entnehmende Speicherzelle nach deren elektrischer Trennung handeln.

Die Erkennung, ob die getrennte Speicherzelle durch eine neue Speicherzelle ersetzt wurde, kann beispielsweise dadurch erfolgen, dass sich der Ladezustand, die Temperatur und/oder der Innenwiderstand der neuen Speicherzelle von der entnommenen Speicherzelle unterscheidet. Bei der neuen Speicherzelle kann es sich um eine Speicherzelle handeln, die bisher noch nicht elektrisch in den Energiespeicher integriert war. Dementsprechend kann es sich bei der neuen Speicherzelle auch um eine bereits (anderweitig) gebrauchte Speicherzelle oder um eine neu hergestellte Speicherzelle handeln. Insbesondere kann die Steuereinheit hierbei ausgestaltet sein, den Ladezustand jeder einzelnen Speicherzelle des Energiespeichers für sich (d.h. separat) zu ermitteln. Alternativ kann auch der Ladezustand jedes Speichermoduls separat ermittelt werden. Der Ladezustand (State of Charge - SOC) kann beispielsweise als Prozentwert oder als Wert in Amperestunden (Ah) angegeben werden. Zusätzlich oder alternativ kann auch der "State of Health" (SOH) zumindest eines Teils der einzelnen Speicherzellen oder der Speichermodule ermittelt werden. Der SOH beschreibt die Fähigkeit der Speicherzelle bzw. des Speichermoduls, die geforderten Leistungsparameter zu erreichen. Der SOH bezeichnet also den Alterungszustand der Speicherzelle bzw. des Speichermoduls.

Das Erkennen, dass eine Speicherzelle entnommen werden soll, kann beispielsweise durch eine Eingabe des Benutzers an dem Energiespeichersystem erfolgen oder automatisch ablaufen, indem erkannt wird, ob eine Speicherzelle (z.B. bezüglich SOC oder SOH) eine schlechte Leistung liefert oder gar defekt ist. Hierbei kann der Benutzer angeben, welche Speicherzelle oder welche Speicherzellen er entnehmen bzw. austauschen möchte. Alternativ oder zusätzlich kann auch über einen Schalter an einer Gehäuseöffnung, die den Energiespeicher verschließt, oder mithilfe einer Schaltsperre (Interlock) erkannt werden, ob eine Speicherzelle oder ein Speichermodul entnommen werden soll.

Das Austauschen einer Speicherzelle kann beispielsweise dann notwendig sein, wenn die Speicherzelle defekt ist oder in ihrer Speicherkapazität stark abgenommen hat. In einem solchen Fall kann die Steuereinheit einen Benutzer auf die defekte oder schwache Speicherzelle hinweisen, woraufhin der Benutzer angeben kann, dass die Speicherzelle entnommen werden soll. Die Kommunikation zwischen dem Energiespeichersystem und dem Benutzer kann beispielsweise mittels eines berührungsempfindlichen Displays erfolgen. Alternativ kann die Steuereinheit eine defekte oder schwache Speicherzelle auch automatisch trennen.

Anschließend wird die zu entnehmende Speicherzelle (oder aber z.B. auch ein ganzes Speichermodul) elektrisch von den übrigen Speicherzellen (das heißt von den nicht zu entnehmenden Speicherzellen) getrennt. Durch das Trennen ist die zu entnehmende Speicherzelle nicht mehr Bestandteil des Energiespeichers, wodurch die zu entnehmende Speicherzelle im Wesentlichen keine elektrische Leistung mehr abgeben oder aufnehmen kann. Die Leistung und/oder die Spannung des Energiespeichers können nach dem Trennen der zu entnehmenden Speicherzelle verringert sein.

Auch direkt nach und auch während dem Trennen der zu entnehmenden Speicherzelle erfolgt bevorzugt weiter der Betrieb des Energiespeichersystems. Das Energiespeichersystem ist also auch nach dem Trennen und auch während des Trennens in der Lage, Energie aufzunehmen, zu speichern und abzugeben.

Nach dem Trennen kann die Speicherzelle dann entnommen und/oder ausgetauscht werden. Insbesondere kann die Steuereinheit oder das Energiespeichersystem dazu ausgebildet sein, ein Entnehmen der nun elektrisch getrennten Speicherzelle zu gestatten. Dies kann beispielsweise durch mechanische Vorkehrungen, durch die Freigabe mittels einer Signalleuchte und dergleichen erfolgen.

Grundsätzlich ist unter einem Entnehmen der Speicherzelle ein Entfernen der Speicherzelle aus dem Energiespeichersystem zu verstehen. Beispielsweise kann aber auch nur ein Abtrennen der Speicherzelle (aber der mechanische Verbleib der Speicherzelle im Energiespeichersystem) als ein Entnehmen im Sinne der vorliegenden Offenbarung gesehen werden.

Die auszutauschende Speicherzelle kann dann mechanisch aus dem Energiespeicher entfernt werden und durch eine neue Speicherzelle ersetzt werden. Insbesondere kann die neue Speicherzelle mit einer Leitung verbunden werden, die es der Steuereinheit gestattet, den Ladezustand der neuen Speicherzelle zu ermitteln. Über die Leitung kann eine Datenkommunikation z.B. mittels Power Line Transmission (PLT) oder Power Line Communication (PLC) stattfinden, wobei die Speicherzelle beispielsweise ihren Ladezustand der Steuereinheit übermittelt. Zu diesem Zweck können die Speicherzellen zumindest zum Teil über Sensoren zur Erfassung des Ladezustands und/oder des SOH verfügen. Hierdurch kann die Steuereinheit feststellen, dass die getrennte Speicherzelle durch eine neue Speicherzelle ersetzt wurde und kann die neue Speicherzelle elektrisch mit den übrigen Speicherzellen verbinden.

Bei der mit der neuen Speicherzelle verbundenen Leitung kann es sich um eine Balancing-Leitung handeln, die auch dazu dienen kann, die neue Speicherzelle zu laden und zu entladen.

Üblicherweise kann es sich bei sämtlichen Speicherzellen (und damit auch bei der neuen Speicherzelle) um grundsätzlich identische Speicherzellen handeln. Die Speicherzellen können somit die gleichen Spezifikationen hinsichtlich Größe, Kapazität, Nennspannung und/oder Innenwiderstand aufweisen.

Generell wird als eine elektrische Verbindung eine Verbindung angesehen, die elektrische Leistung überträgt. Folglich kann eine elektrische Verbindung eine elektrisch leitende, eine induktive und/oder eine kapazitive Verbindung aber auch einen DC/DC-Wandler und dergleichen umfassen.

Neben der Veränderung des Ladezustands kann die Steuereinheit auch ausgebildet sein, die Spannung, die Temperatur und/oder den Innenwiderstand der Speicherzellen und damit auch der neuen Speicherzelle zu ermitteln. Anhand von Änderungen der Spannung, der Temperatur und/oder des Innenwiderstands kann dann ebenfalls festgestellt werden, ob eine neue Speicherzelle in den Energiespeicher eingesetzt wurde.

Das Energiespeichersystem kann modular aufgebaut sein und beispielsweise eine Konvertereinheit umfassen, die das Energiespeichersystem mit einem Netzanschluss, insbesondere mit einem Wechselstrom-Netzanschluss, verbindet. Die Konvertereinheit kann dazu dienen, den Energiespeicher mit elektrischer Energie aus dem Netzanschluss aufzuladen und elektrische Energie des Energiespeichers in den Netzanschluss einzuspeisen. Alternativ oder zusätzlich kann das Energiespeichersystem auch mit einem Gleichstromnetz mit z.B. 12 V, 24 V. 48 V oder 400 V Spannung verbunden sein.

Auch der Energiespeicher selbst kann modular aufgebaut sein und beispielsweise mehrere Energiespeichermodule umfassen, die jeweils mit der Konvertereinheit verbunden sind. Jedes Energiespeichermodul kann dabei einen eigenen Energiespeicher mit einer Vielzahl von Speicherzellen aufweisen.

Es versteht sich, dass das beschriebene Vorgehen zum Entnehmen und Austauschen einer Speicherzelle entsprechend auf den Austausch (d.h. das Entnehmen und Ersetzen) ganzer Speichermodule oder ganzer Energiespeichermodule anwendbar ist. Beispielsweise kann beim Austausch eines Speichermoduls (d.h. dem gleichzeitigen Austausch mehrerer Speicherzellen) ebenfalls erkannt werden, dass das Speichermodul entnommen werden soll. Nach dem Erkennen, dass das Speichermodul entnommen werden soll, kann das zu entnehmende Speichermodul elektrisch von den übrigen Speichermodulen getrennt werden. Anschließend kann erkannt werden, ob das getrennte Speichermodul durch ein neues Speichermodul ersetzt wurde, wobei das neue Speichermodul elektrisch dann mit den übrigen Speicherzellen verbunden wird.

Auch die im Folgenden beschriebenen Ausführungsformen sind jeweils auf einzelne Speicherzellen, Speichermodule aus mehreren Speicherzellen oder ganze Energiespeichermodule mit mehreren Speichermodulen anwendbar.

Vorteilhafte Weiterbildungen der Erfindung sind der Beschreibung, den Zeichnungen sowie den Unteransprüche zu entnehmen.

Erfindungsgemäß ist die Steuereinheit ausgebildet, vor oder mit dem elektrischen Verbinden der neuen Speicherzelle mit den übrigen Speicherzellen, den Ladezustand der neuen Speicherzelle an den Ladezustand der übrigen Speicherzellen anzupassen.

Ebenfalls erfindungsgemäß ist die Steuereinheit alternativ oder zusätzlich ausgebildet, vor oder mit dem elektrischen Verbinden der elektrischen Speicherzelle mit den übrigen Speicherzellen den Ladezustand der übrigen Speicherzellen an den Ladezustand der neuen Speicherzelle anzupassen.

Eine Anpassung der Ladezustände aneinander dient dazu, einen zu hohen Ausgleichsstrom beim elektrischen Verbinden der neuen Speicherzelle mit den übrigen Speicherzellen zu vermeiden, um die Speicherzellen nicht zu schädigen. Der maximale zulässige Ausgleichsstrom kann beispielsweise anhand von Parametern der Speicherzellen bestimmt werden.

Liegt also ein unterschiedlicher Ladezustand der neuen Speicherzelle im Vergleich mit den übrigen Speicherzellen vor, so kann der Ladezustand der neuen Speicherzelle an den Ladezustand der übrigen Speicherzellen angepasst werden. Alternativ kann auch der Ladezustand der übrigen Speicherzellen auf das Niveau des Ladezustands der neuen Speicherzelle gebracht werden. Ebenfalls ist es möglich, dass sowohl der Ladezustand der neuen Speicherzelle als auch der Ladezustand der übrigen Speicherzellen aneinander angepasst werden, das heißt, die Ladezustände bewegen sich aufeinander zu. Die Anpassung erfolgt bevorzugt derart, dass nach der Anpassung der Ladezustand der neuen Speicherzelle und der Ladezustand der übrigen Speicherzellen gleich sind oder sich um weniger als einen vordefinierten Grenzwert unterscheiden. Dieser Grenzwert kann z.B. drei oder fünf Prozentpunkte des Ladezustands betragen.

Beispielsweise kann das Anpassen des Ladezustands durch ein Entladen der jeweiligen Speicherzelle erfolgen. Insbesondere kann dieses Vorgehen verwendet werden, wenn die neue Speicherzelle einen Ladezustand aufweist, der geringfügig größer ist als der Ladezustand der übrigen Speicherzellen. Hierbei kann die neue Speicherzelle dann entladen werden, bis der Ladezustand der neuen Speicherzelle dem Ladezustand der übrigen Speicherzellen entspricht.

Erfindungsgemäß wird die Anpassung durch Aufladen der neuen Speicherzelle oder der übrigen Speicherzellen durchgeführt. Hierbei wird z.B. solange geladen, bis der Ladezustand der neuen Speicherzelle und der Ladezustand der übrigen Speicherzellen gleich sind.

Wird sowohl der Ladezustand der neuen Speicherzelle als auch der Ladezustand der übrigen Speicherzellen angepasst, so kann beispielsweise die neue Speicherzelle entladen und gleichzeitig die übrigen Speicherzellen geladen werden, um möglichst schnell eine Anpassung zu erreichen. Alternativ können auch ein Laden der neuen Speicherzelle und zugleich ein Entladen der übrigen Speicherzellen erfolgen.

Zusätzlich oder alternativ zu dem Ladezustand können auch weitere Parameter, wie zum Beispiel die Temperatur und/oder die Spannung der Speicherzellen aneinander angepasst werden.

Zum Entladen kann das Energiespeichersystem beispielsweise einen Entladewiderstand zum Abbau der elektrischen Energie umfassen. Der Entladewiderstand kann z.B. mittels einer Schaltmatrix mit der neuen Speicherzelle verbunden werden.

Zum Anpassen des Ladezustands können die einzelnen Speicherzellen zumindest zum Teil auch jeweils mittels eines Anpassungsschaltelements elektrisch mit den übrigen Speicherzellen verbunden sein. Ebenfalls kann auch z.B. nur die neue Speicherzelle elektrisch mittels eines Anpassungsschaltelements mit den übrigen Speicherzellen verbunden sein. Folglich muss nur ein einzelnes Anpassungsschaltelement vorgehalten werden, das z.B. über eine Schaltmatrix jeweils mit der neuen Speicherzelle elektrisch verbunden wird.

Das Anpassungsschaltelement kann z.B. einen Transistor (MOSFET), einen DC/DC-Wandler, einen Widerstand und dergleichen umfassen. Zum Anpassen des Ladezustands kann das Anpassungsschaltelement derart angesteuert werden, dass es einen Ausgleichsstrom zwischen der neuen Speicherzelle und den übrigen Speicherzellen begrenzt, beispielsweise durch einen hohen Innenwiderstand oder einen begrenzten Stromfluss durch einen DC/DC-Wandler. Auf diese Weise kann eine Schädigung oder Überlastung der Speicherzellen verhindert werden. Durch den Ausgleichsstrom kann eine Anpassung des Ladezustands der neuen Speicherzelle und der übrigen Speicherzellen aneinander erfolgen. Durch das Anpassungsschaltelement kann die neue Speicherzelle elektrische Energie an den Energiespeicher abgeben oder von dem Energiespeicher aufnehmen.

Das Anpassungsschaltelement kann beispielsweise ausgelegt sein, eine maximale Verlustleistung von 6 Watt abzuführen. Der Ausgleichsstrom kann derart begrenzt sein, dass das Anpassungsschaltelement nicht überlastet wird. Zusätzlich oder alternativ kann der Ausgleichsstrom so eingestellt werden, dass die neue Speicherzelle maximal mit 2 C geladen oder entladen wird (d.h. mit einem Strom der die Speicherzelle in 30 Minuten vollständig laden oder entladen würde).

Erfindungsgemäß ist die Steuereinheit ausgebildet, die Geschwindigkeit der Anpassung des Ladezustands in Abhängigkeit von der bei der Anpassung entstehenden Verlustleistung einzustellen. Hierzu kann z.B. das Anpassungsschaltelement entsprechend angesteuert werden, insbesondere durch eine geeignete Wahl einer Gate-Spannung eines MOSFETs, um einen geeigneten Innenwiderstand des Anpassungsschaltelements einzustellen. Sowohl beim Laden als auch beim Entladen der Speicherzellen (bzw. des gesamten Energiespeichers) entsteht Wärme in den Speicherzellen und der zugehörigen Beschaltung. Zudem kann beim Entladen beispielsweise Wärme an dem Entladewiderstand entstehen. Um eine Überhitzung des Energiespeichersystems zu vermeiden, kann die Geschwindigkeit der Anpassung des Ladezustands veränderbar sein, beispielsweise durch einen veränderbaren Entladewiderstand.

Insbesondere ist die Steuereinheit ausgebildet, eine momentan abgeführte Verlustleistung des Energiespeichersystems zu ermitteln und die Geschwindigkeit der Anpassung des Ladezustands so zu wählen, dass eine maximal abführbare Verlustleistung des Energiespeichersystems nicht überschritten wird.

Die momentan abgeführte Verlustleistung kann beispielsweise über einen Temperatursensor auf einer Kühlfläche des Energiespeichersystems ermittelt werden. Zusätzlich zu dem Temperatursensor auf der Kühlfläche kann auch ein Temperatursensor vorgesehen sein, der eine Umgebungstemperatur des Energiespeichersystems misst. Anhand des Unterschieds zwischen der Temperatur der Kühlfläche und der Umgebungstemperatur kann die maximal abführbare Verlustleistung ermittelt werden. Zusätzlich können die Speicherzellen eine Sensorik zur Temperaturerfassung und Mittel zur Übermittlung der Temperatur an die Steuereinheit aufweisen. Ebenfalls können Temperaturgrenzen festgelegt sein, die z.B. an der Kühlfläche oder in den Speicherzellen nicht überschritten werden dürfen.

Alternativ kann die maximal abführbare Verlustleistung auch ein vorbestimmter Wert sein, der derart ausgelegt ist, dass ein Überhitzen des Energiespeichersystems vermieden wird. Die Verlustleistung und/oder die maximal abführbare Verlustleistung können in Abhängigkeit von der Position der neuen Speicherzelle auch lokal ermittelt werden. Dies bedeutet, die Verlustleistung und/oder die maximal abführbare Verlustleistung werden in dem Bereich des Energiespeichers ermittelt, in dem die neue Speicherzelle angeordnet ist. Ein solches Vorgehen kann insbesondere bei modularen Energiespeichersystemen oder bei Energiespeichersystemen mit einer großen räumlichen Ausdehnung bevorzugt sein.

Unter der Geschwindigkeit der Anpassung des Ladezustands ist dabei die Änderung des Ladezustands pro Zeiteinheit zu verstehen (ΔSOC/Δt). Alternativ kann auch die Höhe eines Lade-/Entladestroms die Geschwindigkeit der Anpassung definieren.

Gemäß einer weiteren vorteilhaften Ausführungsform ist die Steuereinheit ausgebildet, vor dem Trennen der zu entnehmenden Speicherzelle die elektrisch abgegebene oder aufgenommene Leistung des Energiespeichersystems zu reduzieren, insbesondere unter einen vorbestimmten Schwellenwert. Unter der von dem Energiespeichersystem abgegebenen oder aufgenommenen Leistung (d.h. der Systemleistung) ist die elektrische Leistung zu einem jeweiligen Zeitpunkt zu verstehen, die von dem Energiespeichersystem aufgenommen oder abgegeben wird. Durch die Reduktion der elektrisch abgegebenen oder aufgenommenen Leistung kann zum einen vermieden werden, dass nach dem Entnehmen einer Speicherzelle die übrigen Speicherzellen überlastet werden. Zum anderen kann sich der Vorteil ergeben, dass die Verlustleistung des Energiespeichersystems verringert wird, wodurch eine schnellere Anpassung an die neue Speicherzelle erfolgen kann.

Gemäß einer weiteren vorteilhaften Ausführungsform ist das Energiespeichersystem ausschließlich passiv gekühlt. Dies bedeutet, für die Kühlung des Energiespeichersystems wird keine elektrische Energie aufgewendet. Insbesondere umfasst das Energiespeichersystem daher keine Lüfter, keine Kältemaschinen und dergleichen. Vorteilhafterweise kann durch ein nur passiv gekühltes Energiespeichersystem eine Geräuschentwicklung des Energiespeichersystems stark reduziert werden, wodurch es auch z.B. in Wohnräumen aufstellbar ist.

Das Energiespeichersystem kann bevorzugt zum Anschluss an ein 230 Volt oder 110 Volt Wechselspannungsnetz ausgebildet sein und insbesondere eine skalierbare maximale Systemleistung aufweisen.

Erfindungsgemäß ist die Steuereinheit ausgebildet, ein zeitliches Betriebsmuster des Energiespeichersystems zu ermitteln, wobei für das Betriebsmuster insbesondere die Eingangsleistung, die Ausgangsleistung und/oder der Ladezustand der Speicherzellen über die Zeit ermittelt werden. Das Betriebsmuster kann eine Statistik umfassen, zu welchen Zeiten mit welcher Wahrscheinlichkeit der Energiespeicher geladen oder entladen wird.

Bevorzugt kann die Statistik des Betriebsmusters angeben, zu welchen Zeitpunkten in der Zukunft mit welcher Wahrscheinlichkeit ein jeweiliger Ladezustand des Energiespeichers vorliegt und ob zu diesen Zeitpunkten ein Entladen oder Laden des Energiespeichers erfolgt.

Aufgrund des zeitlichen Betriebsmusters und/oder der Statistik kann ein Anpassen der neuen Speicherzelle bzw. der übrigen Speicherzellen optimiert werden, da beispielsweise ein Anpassen (z.B. ein Entladen) der neuen Speicherzelle entfallen kann, wenn vorhersehbar ist, dass die übrigen Speicherzellen mit einer hohen Wahrscheinlichkeit innerhalb einer vorbestimmten Zeitspanne den Ladezustand der neuen Speicherzelle erreichen werden.

Genauer gesagt kann z.B. eine Anpassung und insbesondere ein Entladen der neuen Speicherzelle entfallen, wenn anhand des Betriebsmusters zu erwarten ist, dass sich der Energiespeicher weiter entladen wird und sich somit "von allein" an den Ladezustand der neuen Speicherzelle anpasst. Dies kann beispielsweise der Fall sein, wenn das Energiespeichersystem zusammen mit einer Photovoltaikanlage verwendet wird und das Energiespeichersystem jeden Tag bei Dunkelheit entladen wird.

Allgemein kann die Steuereinheit ausgebildet sein, einen maximalen Anpassungszeitraum und/oder eine minimale Anpassungswahrscheinlichkeit zu definieren, wobei zunächst keine Anpassung der neuen Speicherzelle oder der übrigen Speicherzellen erfolgt, wenn aufgrund des zeitlichen Betriebsmusters vorherzusehen ist, dass mit einer Wahrscheinlichkeit oberhalb der minimalen Anpassungswahrscheinlichkeit innerhalb des maximalen Anpassungszeitraums der Ladezustand von neuer Speicherzelle und übrigen Speicherzellen im Wesentlichen gleich sein wird.

Insbesondere können ein maximaler Anpassungszeitraum von fünf Stunden und eine minimale Anpassungswahrscheinlichkeit von 50% durch einen Benutzer vorgegeben sein. Ist nach dem Einsetzen der neuen Speicherzelle anhand der Statistik ersichtlich, dass der Ladezustand des Energiespeichers innerhalb der nächsten fünf Stunden mit einer Wahrscheinlichkeit von mehr als 50% dem Ladezustand der neuen Speicherzelle entsprechen wird, so wird zunächst keine Anpassung vorgenommen. Kommt es beispielsweise nach drei Stunden dazu, dass die Ladezustände gleich sind, wird die neue Speicherzelle ohne Anpassung (die dann nicht notwendig ist) elektrisch mit den übrigen Speicherzellen verbunden. Sollten innerhalb von fünf Stunden keine gleichen Ladezustände vorhanden sein, so wird nach Ablauf der fünf Stunden mit der Anpassung begonnen. Dies bedeutet, nach Ablauf des maximalen Anpassungszeitraums wird mit der Anpassung begonnen, z.B. durch eine entsprechende Ansteuerung des Anpassungsschaltelements, sofern die neue Speicherzelle dann noch nicht elektrisch mit den übrigen Speicherzellen verbunden ist.

Auch beim Trennen der zu ersetzenden Speicherzelle kann das Betriebsmuster verwendet werden, um ein Trennen mit einem vorbestimmten Ladezustand der zu ersetzenden Speicherzelle zu ermöglichen, ohne eine gezielte Anpassung des Ladezustands vornehmen zu müssen.

Gemäß einer weiteren vorteilhaften Ausführungsform ist die Steuereinheit ausgebildet, die zu entnehmende Speicherzelle dann elektrisch von den übrigen Speicherzellen zu trennen, wenn die zu entnehmende Speicherzelle einen vorbestimmten Ladezustand aufweist und/oder wenn das Energiespeichersystem weniger als eine vorbestimmte elektrische Leistung abgibt oder aufnimmt. Es kann also ermöglicht werden, die zu entnehmende Speicherzelle mit einem vordefinierten Ladezustand zu entnehmen, um beispielsweise die Lagerung der zu entnehmenden Speicherzelle mit einem für die Lagerung idealen Ladezustand vorzunehmen. Alternativ oder zusätzlich kann das Entnehmen dann erfolgen, wenn das Energiespeichersystem elektrische Leistung abgibt, die unter einem vorbestimmten Leistungsgrenzwert liegt, um die übrigen Speicherzellen auch nach der Entnahme der zu entnehmenden Speicherzelle nicht zu überlasten.

Bevorzugt kann das Trennen innerhalb eines Zeitraums erfolgen, der kürzer ist als eine vordefinierte Trennungszeit. Alternativ kann das Trennen unabhängig vom Betriebszustand und/oder unabhängig vom Ladezustand der Speicherzellen erfolgen.

Gemäß einer weiteren vorteilhaften Ausführungsform ist zumindest eine Reserve-Speicherzelle in dem Energiespeichersystem vorgesehen, welche die abgetrennte Speicherzelle ersetzt. Durch das Vorhalten von Reserve-Speicherzellen kann das mechanische Einsetzen einer neuen Speicherzelle entfallen, wodurch der Austausch von Speicherzellen vereinfacht wird. Zudem kann ein Entnehmen der getrennten Speicherzelle überflüssig werden, wodurch der Ersatz einer defekten Speicherzelle vollautomatisch vonstattengehen kann.

Gemäß einer weiteren vorteilhaften Ausführungsform sind die Speicherzellen zumindest zum Teil seriell verschaltet, wobei nach dem Trennen der zu entnehmenden Speicherzelle, die zu entnehmende Speicherzelle mittels einer Bypassleitung überbrückt wird, wobei die Bypassleitung bevorzugt den gleichen Widerstand aufweist, wie die zu entnehmende Speicherzelle.

Durch die Bypassleitung kann die Funktion des Speichermoduls aufrechterhalten werden, wobei durch den Widerstand der Bypassleitung die elektrischen Eigenschaften des Speichermoduls soweit wie möglich beibehalten werden. Die Bypassleitung kann einen Halbleiterschalter, beispielsweise einen MOSFET (Metal Oxide Semiconductor Field Effect Transistor) umfassen, wobei der Halbleiterschalter derart angesteuert wird, dass der Halbleiterschalter den Widerstand der entnommenen Speicherzelle annimmt. Der Widerstand der entnommenen Speicherzelle kann durch die Bypassleitung auch dynamisch nachgebildet werden. Hierzu kann der Widerstand in Abhängigkeit des jeweiligen Betriebszustands (d.h. in Abhängigkeit der Temperatur, der Last, etc.) eingestellt werden.

Alternativ kann die Bypassleitung auch einen Widerstand von im Wesentlichen Null Ohm aufweisen oder es kann mittels der Bypassleitung das Verhalten einer Speicherzelle simuliert werden, beispielsweise durch sich verändernde Widerstände.

Gemäß einer alternativen Ausführungsform sind die Speicherzellen parallel geschaltet. Bei einer Parallelschaltung ist beim Entnehmen einer Speicherzelle keine Bypassleitung notwendig. Bei einer Parallelschaltung kann die maximal aus einem Speichermodul bzw. aus dem Energiespeicher zu entnehmende Leistung absinken, so dass die Systemleistung vor dem Entnehmen der Speicherzelle bevorzugt reduziert wird.

Gemäß einer weiteren vorteilhaften Ausführungsform ist die zu entnehmende Speicherzelle und/oder die neue Speicherzelle mittels eines elektrischen Schaltelements von den übrigen Speicherzellen trennbar und mit den übrigen Speicherzellen verbindbar. Das elektrische Schaltelement kann von der Steuereinheit ansteuerbar sein. Insbesondere kann es sich bei dem Schaltelement um das Anpassungsschaltelement handeln. Zudem können die Speicherzellen alle oder zumindest zum Teil jeweils ein eigenes Schaltelement umfassen. Alternativ kann auch jeweils ein Speichermodul ein eigenes Schaltelement aufweisen, um das gesamte Speichermodul elektrisch von den übrigen Speicherzellen zu trennen.

Bevorzugt umfasst das elektrische Schaltelement einen Halbleiterschalter (insbesondere einen MOSFET) und/oder einen ohmschen Widerstand und/oder einen DC/DC-Wandler und/oder zwei induktiv gekoppelte Spulen, wobei bevorzugt jeder Speicherzelle ein eigenes elektrisches Schaltelement zugeordnet ist.

Der Halbleiterschalter kann derart ausgebildet sein, dass er bidirektional leitend geschalten werden kann. Zu diesem Zweck können beispielsweise zwei Transistoren vorgesehen sein. Bei dem DC/DC-Wandler kann es sich um einen bidirektionalen oder einen unidirektionalen DC/DC-Wandler handeln. Ist eine induktive elektrische Verbindung mittels zweier induktiv gekoppelter Spulen vorgesehen, so kann z.B. jeder Speicherzelle eine separate Primär- und eine separate Sekundärspule zugeordnet sein. Alternativ kann eine einzelne Primärspule für mehrere oder alle Speicherzellen vorgesehen sein, wobei die Primärspule induktiv mit jeweils separaten Sekundärspulen gekoppelt ist. Die separaten Sekundärspulen können jeweils einer einzelnen Speicherzelle zugeordnet sein.

Weiterer Gegenstand der Erfindung ist ein Verfahren zum Austausch einer Speicherzelle eines Energiespeichersystems gemäß Anspruch 11.

Die Ausführungen zu dem erfindungsgemäßen Energiespeichersystem, insbesondere hinsichtlich Vorteilen und bevorzugten Ausführungsformen gelten für das erfindungsgemäße Verfahren entsprechend.

Ferner betrifft die Erfindung ein weiteres Energiespeichersystem gemäß Anspruch 12.

Mit dem erfindungsgemäßen weiteren Energiespeichersystem ist es somit möglich, im laufenden Betrieb zusätzliche Speicherzellen in den Energiespeicher einzubinden bzw. dem Energiespeicher hinzuzufügen. Auf diese Weise kann die Leistungsfähigkeit des Energiespeichersystems im Betrieb vergrößert werden.

Die Ausführungen zur Anpassung und Integration von neuen Speicherzellen und zu Betriebsstrategien zur Anpassung und Integration von neuen Speicherzellen gelten für das weitere Energiespeichersystem entsprechend.

Nachfolgend wird die Erfindung rein beispielhaft unter Bezugnahme auf die Zeichnungen beschrieben. Es zeigen:
- Fig. 1: ein Energiespeichersystem; und
- Fig. 2: ein Ablaufdiagramm für den Austausch einer Speicherzelle des Energiespeichersystems.

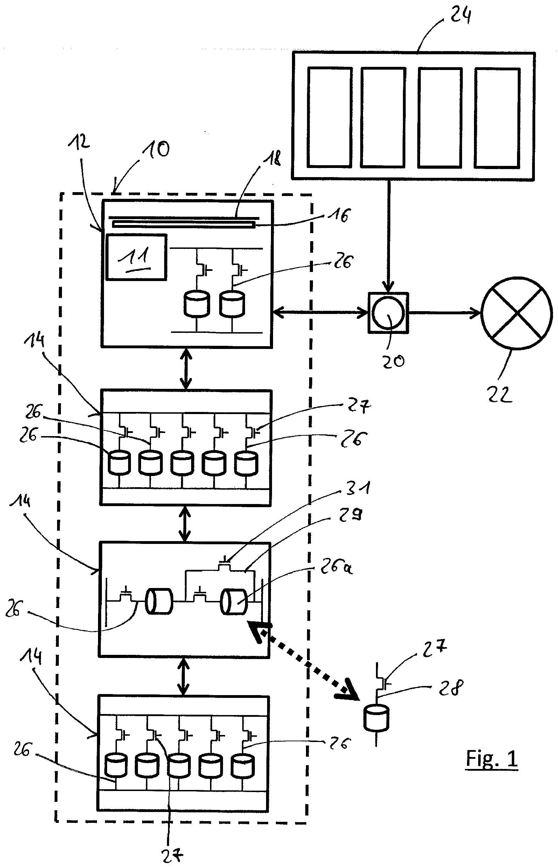

Fig. 1 zeigt ein Energiespeichersystem 10. Das Energiespeichersystem 10 umfasst eine Steuereinheit 11, welche in einer Konvertereinheit 12 angeordnet ist, und drei Speichermodule 14.

Die Konvertereinheit 12 umfasst einen Konverter 16 sowie eine Kühlfläche 18, die Abwärme des Energiespeichersystems 10 passiv abführt. Die Konvertereinheit 12 ist elektrisch mit den Speichermodulen 14 verbunden.

Das Energiespeichersystem 10 und insbesondere die Konvertereinheit 12 sind mit einem Stromnetz 20 gekoppelt, wobei an das Stromnetz 20 zusätzlich ein Verbraucher 22 und eine Photovoltaikanlage 24 (über einen nicht gezeigten Wechselrichter) angeschlossen sind. Das Stromnetz 20 führt eine Wechselspannung.

Das Energiespeichersystem 10 kann zusammen mit der Photovoltaikanlage 24 ein sogenanntes Inselsystem bilden, das keine weitere von außen zugeführte elektrische Energie erhält.

Die Konvertereinheit 12 und die Speichermodule 14 weisen jeweils eine Vielzahl von identischen Speicherzellen 26 auf. Die Speicherzellen 26 umfassen jeweils ein elektrisches Schaltelement 27 in Form eines MOSFETs, welches auch als Anpassungsschaltelement dient. In zwei der Speichermodule 14 sind die Speicherzellen 26 jeweils parallel geschaltet. In einem der Speichermodule 14 sind die Speicherzellen 26 seriell verschaltet.

Im Betrieb des Energiespeichersystems 10, wird von der Photovoltaikanlage 24 erzeugte elektrische Energie mittels der Konvertereinheit 12 derart in einen Gleichstrom umgewandelt, dass die elektrische Energie in den Speichermodulen 14 gespeichert werden kann.

Beispielsweise wird bei Dunkelheit in den Speicherzellen 26 gespeicherte elektrische Energie von dem Konverter 16 derart umgewandelt, dass die elektrische Energie in das Stromnetz 20 einspeisbar ist und von dem Verbraucher 22 verwendet werden kann. Hierzu kann der Konverter 16 beispielsweise einen Wechselstrom mit einer Frequenz von 50 Hz und eine Spannung von 230 Volt erzeugen.

In Fig. 1 ist eine neue Speicherzelle 28 gezeigt, die eine der seriell geschalteten Speicherzellen 26 aus einem der Speichermodule 14 ersetzen soll. Die zu ersetzende Speicherzelle ist mit dem Bezugszeichen 26a gekennzeichnet. Während des Austauschs der zu ersetzenden Speicherzelle 26a wird die Speicherzelle 26a von einer Bypassleitung 29 mit einem Bypasstransistor 31 überbrückt.

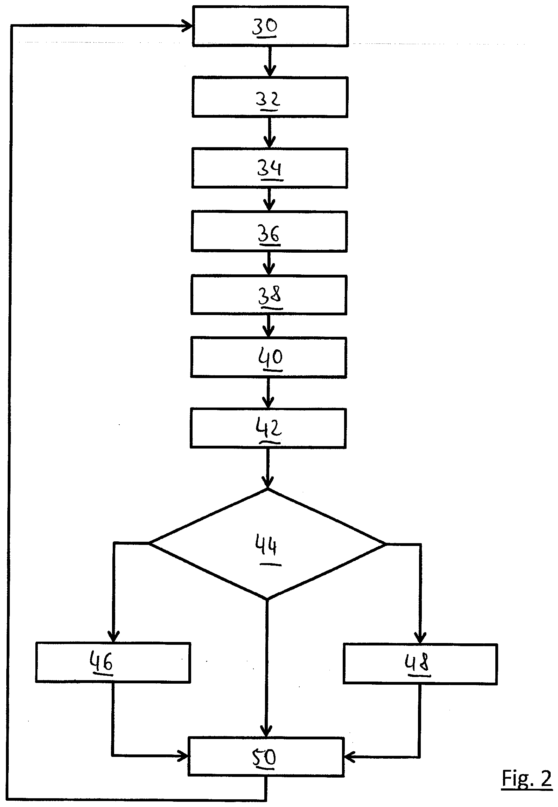

Der Ablauf des Austauschs der Speicherzelle 26a gegen die neue Speicherzelle 28 ist in Fig. 2 schematisch dargestellt.

In Block 30 wird von dem regulären Betrieb des Energiespeichersystems 10 ausgegangen. In Block 32 wird festgestellt, dass die zu ersetzende Speicherzelle 26a defekt ist. Dies wird einem Benutzer mitgeteilt.

Daraufhin teilt der Benutzer dem Energiespeichersystem 10 in Block 34 über ein (nicht gezeigtes) Touch-Display mit, dass er die defekte Speicherzelle 26a durch die neue Speicherzelle 28 austauschen möchte. Daraufhin trennt in Block 36 die Steuereinheit 11 des Energiespeichersystems 10 die defekte Speicherzelle 26a von den übrigen Speicherzellen 26 und teilt dies dem Benutzer mit.

In Block 38 wird die defekte Speicherzelle 26a durch eine Serviceöffnung entnommen und in Block 40 die neue Speicherzelle 28 in das Energiespeichersystem 10 eingesetzt.

In Block 42 wird der Ladezustand der neuen Speicherzelle 28 und auch der übrigen Speicherzellen 26 erfasst. In Abhängigkeit der Ladezustände wird in Block 44 entschieden, ob ein Laden oder Entladen der neuen Speicherzelle 28 oder der übrigen Speicherzellen 26 notwendig ist. So wird mit Block 46 weiter verfahren, wenn der Ladezustand der neuen Speicherzelle 28 höher ist als der Ladezustand der übrigen Speicherzellen 26 (d.h. wenn die neue Speicherzelle 28 stärker geladen ist als die übrigen Speicherzellen 26). In diesem Fall wird die neue Speicherzelle 28 entladen und zugleich werden die übrigen Speicherzellen 26 geladen, bis der Ladezustand der neuen Speicherzelle 28 und der übrigen Speicherzellen 26 gleich ist.

Ist der Ladezustand der neuen Speicherzelle 28 geringer als der der übrigen Speicherzellen 26, wird mit Block 48 fortgefahren. In Block 48 wird die neue Speicherzelle 28 geladen und zugleich die übrigen Speicherzellen 26 entladen, bis die Ladezustände der Zellen 26, 28 identisch sind.

Das Laden und Entladen in den Blöcken 46 und 48 erfolgt jeweils durch einen Ausgleichsstrom (beispielsweise U- oder I-Ladung), der durch das elektrische Schaltelement 27 der neuen Speicherzelle 28 eingestellt wird.

Die Entladung erfolgt in beiden Fällen derart, dass die bei der Entladung entstehende Wärme über die Kühlfläche 18 bei nur passiver Kühlung abgeführt werden kann.

Sind die Ladezustände der neuen Speicherzelle 28 und der übrigen Speicherzellen 26 schon beim Einsetzen der neuen Speicherzelle 28 identisch wird gleich mit Block 50 fortgefahren, in welchem eine elektrische Verbindung der neuen Speicherzelle 28 mit den übrigen Speicherzellen 26 hergestellt wird. Anschließend wird mit dem regulären Betrieb des Energiespeicherspeichersystems 10 in Block 30 fortgefahren.

Es versteht sich, dass in Block 44 auch andere Betriebsstrategien zur Anpassung der Ladezustände (wie oben beschrieben) ausgewählt werden können.

### Bezugszeichenliste

- 10: Energiespeichersystem
- 11: Steuereinheit
- 12: Konvertereinheit
- 14: Speichermodul
- 16: Konverter
- 18: Kühlfläche
- 20: Stromnetz
- 22: Verbraucher
- 24: Photovoltaikanlage
- 26: Speicherzelle
- 26a: zu entnehmende Speicherzelle
- 27: elektrisches Schaltelement
- 28: neue Speicherzelle
- 29: Bypassleitung
- 30: regulärer Betrieb
- 31: Bypasstransistor
- 32: defekte Speicherzelle
- 34: Austausch initiieren
- 36: Speicherzelle trennen
- 38: Speicherzelle entnehmen
- 40: Speicherzelle einsetzen
- 42: Ladezustände prüfen
- 44: Entscheidungsblock
- 46: Ladezustände anpassen
- 48: Ladezustände anpassen
- 50: Speicherzelle elektrisch verbinden

## Patentansprüche

1. Energiespeichersystem (10) zur wiederholten Aufnahme, Speicherung und Abgabe elektrischer Energie, mit
einer Steuereinheit und einem Energiespeicher umfassend eine Vielzahl von elektrischen Speicherzellen (26, 26a, 28), welche in Speichermodule (14) gegliedert sind, wobei die Steuereinheit (11) ausgestaltet ist, den Ladezustand zumindest eines Teils der Speicherzellen (26, 26a, 28) separat zu ermitteln,
wobei
die Steuereinheit (11) ausgebildet ist,
- zu erkennen, ob zumindest eine Speicherzelle (26, 26a) entnommen werden soll,
- nach dem Erkennen, dass zumindest eine Speicherzelle (26, 26a) entnommen werden soll, die zu entnehmende Speicherzelle (26a) elektrisch von den übrigen Speicherzellen (26) zu trennen,
- zu erkennen, ob die getrennte Speicherzelle (26a) durch eine neue Speicherzelle (28) ersetzt wurde,
- die neue Speicherzelle (28) elektrisch mit den übrigen Speicherzellen (26) zu verbinden, wobei
die Steuereinheit (11) ausgebildet ist, ein zeitliches Betriebsmuster des Energiespeichersystems (10) zu ermitteln, wobei für das Betriebsmuster eine Eingangsleistung, eine Ausgangsleistung und der Ladezustand der Speicherzellen (26, 26a) über die Zeit ermittelt werden,
wobei
die Steuereinheit (11) ausgebildet ist, vor oder mit dem elektrischen Verbinden der neuen Speicherzelle (28) mit den übrigen Speicherzellen (26) den Ladezustand der neuen Speicherzelle (28) durch Aufladen an den Ladezustand der übrigen Speicherzellen (26) anzupassen, wobei die Steuereinheit (11) ausgebildet ist, die Geschwindigkeit der Anpassung des Ladezustands in Abhängigkeit von der bei der Anpassung entstehenden Verlustleistung einzustellen, und/oder dass
die Steuereinheit (11) ausgebildet ist, vor oder mit dem elektrischen Verbinden der neuen Speicherzelle (28) mit den übrigen Speicherzellen (26) den Ladezustand der übrigen Speicherzellen (26) durch Aufladen an den Ladezustand der neuen Speicherzelle (28) anzupassen,
wobei die Steuereinheit (11) ausgebildet ist, die Geschwindigkeit der Anpassung des Ladezustands in Abhängigkeit von der bei der Anpassung entstehenden Verlustleistung einzustellen.

2. Energiespeichersystem (10) nach Anspruch 1,
**dadurch gekennzeichnet, dass**
die Speicherzellen zur Anpassung des Ladezustands zumindest zum Teil jeweils mittels eines Anpassungsschaltelements (27) mit den übrigen Speicherzellen elektrisch verbunden sind.

3. Energiespeichersystem (10) nach einem der Ansprüche 1 bis 2,
**dadurch gekennzeichnet, dass**
die Steuereinheit (11) ausgebildet ist, eine momentan abgeführte Verlustleistung des Energiespeichersystems (10) zu ermitteln und die Geschwindigkeit der Anpassung des Ladezustands so zu wählen, dass eine maximal abführbare Verlustleistung des Energiespeichersystems (10) nicht überschritten wird.

4. Energiespeichersystem (10) nach zumindest einem der vorstehenden Ansprüche,
**dadurch gekennzeichnet, dass**
die Steuereinheit (11) ausgebildet ist, vor dem Trennen der zu entnehmenden Speicherzelle (26a) die elektrisch abgegebene oder aufgenommene Leistung des Energiespeichersystems (10) zu reduzieren, insbesondere unter einen vorbestimmten Schwellenwert.

5. Energiespeichersystem (10) nach zumindest einem der vorstehenden Ansprüche,
**dadurch gekennzeichnet, dass**
das Energiespeichersystem (10) ausschließlich passiv gekühlt ist.

6. Energiespeichersystem (10) nach zumindest einem der vorstehenden Ansprüche,
**dadurch gekennzeichnet, dass**
das Betriebsmuster eine Statistik umfasst, wobei die Statistik des Betriebsmusters angibt, zu welchen Zeitpunkten in der Zukunft mit welcher Wahrscheinlichkeit ein jeweiliger Ladezustand des Energiespeichers vorliegt und/oder ob zu diesen Zeitpunkten ein Entladen oder Laden des Energiespeichers erfolgt.

7. Energiespeichersystem (10) nach Anspruch 6,
**dadurch gekennzeichnet, dass**
die Steuereinheit (11) ausgebildet ist, einen maximalen Anpassungszeitraum und/oder eine minimale Anpassungswahrscheinlichkeit zu definieren, wobei keine Anpassung der neuen Speicherzelle (28) und/oder der übrigen Speicherzellen (26) erfolgt, wenn aufgrund des zeitlichen Betriebsmusters vorherzusehen ist, dass mit einer Wahrscheinlichkeit oberhalb der minimalen Anpassungswahrscheinlichkeit innerhalb des maximalen Anpassungszeitraums der Ladezustand der neuen Speicherzelle (28) und der übrigen Speicherzellen (26) im Wesentlichen gleich sein wird.

8. Energiespeichersystem (10) nach zumindest einem der vorstehenden Ansprüche,
**dadurch gekennzeichnet, dass**
die Steuereinheit (11) ausgebildet ist, die zu entnehmende Speicherzelle (26a) dann elektrisch von den übrigen Speicherzellen (26) zu trennen, wenn die zu entnehmende Speicherzelle (26a) einen vorbestimmten Ladezustand aufweist und/oder wenn das Energiespeichersystem (10) weniger als eine vorbestimmte elektrische Leistung abgibt oder aufnimmt, und/oder dass eine Reserve-Speicherzelle in dem Energiespeichersystem vorgesehen ist, welche die abgetrennte Speicherzelle (26a) ersetzt.

9. Energiespeichersystem (10) nach zumindest einem der vorstehenden Ansprüche,
**dadurch gekennzeichnet, dass**
die Speicherzellen (26, 26a) zumindest zum Teil seriell verschaltet sind, wobei nach dem Trennen der zu entnehmenden Speicherzelle (26a), die zu entnehmende Speicherzelle mittels einer Bypassleitung (29) überbrückt wird, wobei die Bypassleitung (29) bevorzugt den gleichen Widerstand aufweist, wie die zu entnehmende Speicherzelle (26a).

10. Energiespeichersystem (10) nach zumindest einem der vorstehenden Ansprüche,
**dadurch gekennzeichnet, dass**
die zu entnehmende Speicherzelle (26a) und/oder die neue Speicherzelle (28) mittels eines elektrischen Schaltelements (27) von den übrigen Speicherzellen trennbar und mit den übrigen Speicherzellen (26) verbindbar ist, wobei die Speicherzellen (26) bevorzugt zumindest zum Teil ein eigenes Schaltelement (27) umfassen, und wobei
das elektrische Schaltelement (27) beispielsweise einen Halbleiterschalter und/oder einen ohmschen Widerstand und/oder einen DC/DC-Wandler und/oder zwei induktiv gekoppelte Spulen umfasst, wobei bevorzugt jeder Speicherzelle (26, 26a, 28) ein eigenes elektrisches Schaltelement (27) zugeordnet ist.

11. Verfahren zum Austausch einer Speicherzelle (26, 26a, 28) eines Energiespeichersystems (10), wobei das Energiespeichersystem (10) einen Energiespeicher mit einer Vielzahl von elektrischen Speicherzellen (26, 26a, 28) umfasst, welche in Speichermodule (14) gegliedert sind, wobei
- erkannt wird, ob zumindest eine Speicherzelle (26, 26a) entnommen werden soll,
- nach dem Erkennen, dass zumindest eine Speicherzelle (26, 26a) entnommen werden soll, die zu entnehmende Speicherzelle (26a) elektrisch von den übrigen Speicherzellen (26) getrennt wird,
- erkannt wird, ob die abgetrennte Speicherzelle (26a) durch eine neue Speicherzelle (28) ersetzt wurde,
- die neue Speicherzelle (28) elektrisch mit den übrigen Speicherzellen (26) verbunden wird,
- ein zeitliches Betriebsmuster des Energiespeichersystems (10) ermittelt wird, wobei für das Betriebsmuster eine Eingangsleistung, eine Ausgangsleistung und der Ladezustand der Speicherzellen (26, 26a) über die Zeit ermittelt werden,
- vor oder mit dem elektrischen Verbinden der neuen Speicherzelle (28) mit den übrigen Speicherzellen (26) der Ladezustand der neuen Speicherzelle (28) durch Aufladen an den Ladezustand der übrigen Speicherzellen (26) angepasst wird, die Geschwindigkeit der Anpassung des Ladezustands in Abhängigkeit von der bei der Anpassung entstehenden Verlustleistung eingestellt wird,
und/oder dass vor oder mit dem elektrischen Verbinden der neuen Speicherzelle (28) mit den übrigen Speicherzellen (26) der Ladezustand der übrigen Speicherzellen (26) durch Aufladen an den Ladezustand der neuen Speicherzelle (28) angepasst wird, wobei die Geschwindigkeit der Anpassung des Ladezustands in Abhängigkeit von der bei der Anpassung entstehenden Verlustleistung eingestellt wird.

12. Energiespeichersystem (10) zur wiederholten Aufnahme, Speicherung und Abgabe elektrischer Energie, mit
einer Steuereinheit und einem Energiespeicher umfassend eine Vielzahl von elektrischen Speicherzellen (26, 26a, 28), welche in Speichermodule (14) gegliedert sind, wobei die Steuereinheit (11) ausgestaltet ist, den Ladezustand zumindest eines Teils der Speicherzellen (26, 26a, 28) separat zu ermitteln, wobei
die Steuereinheit (11) ausgebildet ist,
- zu erkennen, ob eine neue Speicherzelle (28) dem Energiespeicher hinzugefügt werden soll,
- die neue Speicherzelle (28) elektrisch mit den übrigen Speicherzellen (26) zu verbinden,
- ein zeitliches Betriebsmuster des Energiespeichersystems (10) zu ermitteln, wobei für das Betriebsmuster eine Eingangsleistung, eine Ausgangsleistung und der Ladezustand der Speicherzellen (26, 26a) über die Zeit ermittelt werden,
- vor oder mit dem elektrischen Verbinden der neuen Speicherzelle (28) mit den übrigen Speicherzellen (26)
den Ladezustand der neuen Speicherzelle (28) durch Aufladen an den Ladezustand der übrigen Speicherzellen (26) anzupassen, wobei die Steuereinheit (11) ausgebildet ist, die Geschwindigkeit der Anpassung des Ladezustands in Abhängigkeit von der bei der Anpassung entstehenden Verlustleistung einzustellen, und/oder den Ladezustand der übrigen Speicherzellen (26) durch Aufladen an den Ladezustand der neuen Speicherzelle (28) anzupassen, wobei die Steuereinheit (11) ausgebildet ist, die Geschwindigkeit der Anpassung des Ladezustands in Abhängigkeit von der bei der Anpassung entstehenden Verlustleistung einzustellen.

## Claims

1. An energy storage system (10) for a repeated intake, storage and release of electrical energy, comprising
a control unit and an energy store comprising a plurality of electrical storage cells (26, 26a, 28) which are organized in storage modules (14), wherein the control unit (11) is configured to separately determine the state of charge of at least some of the storage cells (26, 26a, 28),
wherein
the control unit (11) is configured
- to recognize whether at least one storage cell (26, 26a) should be removed;
- to electrically disconnect the storage cell (26a) to be removed from the remaining storage cells (26) after the recognition that at least one storage cell (26, 26a) should be removed;
- to recognize whether the disconnected storage cell (26a) has been replaced by a new storage cell (28); and
- to electrically connect the new storage cell (28) to the remaining storage cells (26), wherein
the control unit (11) is configured to determine a temporal operating pattern of the energy storage system (10), with an input power, an output power and the state of charge of the storage cells (26, 26a) being determined over time for the operating pattern;
wherein
the control unit (11) is configured to adapt the state of charge of the new storage cell (28) by charging to the state of charge of the remaining storage cells (26) before or on the electrical connection of the new storage cell (28) to the remaining storage cells (26), wherein the control unit (11) is configured to set the speed of the adaptation of the state of charge in dependence on the dissipation loss arising on the adaptation; and/or wherein
the control unit (11) is configured to adapt the state of charge of the remaining storage cells (26) by charging to the state of charge of the new storage cell (28) before or on the electrical connection of the new storage cell (28) to the remaining storage cells (26),
wherein the control unit (11) is configured to set the speed of the adaptation of the state of charge in dependence on the dissipation loss arising on the adaptation.

2. An energy storage system (10) in accordance with claim 1,
**characterized in that**,
to adapt the state of charge, at least some of the storage cells are electrically connected to the remaining storage cells by means of an adaptation switching element (27) in each case.

3. An energy storage system (10) in accordance with one of the claims 1 to 2, **characterized in that**
the control unit (11) is configured to determine a currently led off dissipation loss of the energy storage system (10) and to select the speed of the adaptation of the state of charge such that a maximum dissipation loss of the energy storage system (10) that can be led off is not exceeded.

4. An energy storage system (10) in accordance with at least one of the preceding claims,
**characterized in that**
the control unit (11) is configured to reduce the electrically released or drawn power of the energy storage system (10), in particular to below a predefined threshold value, before the disconnection of the storage cell (26a) to be removed.

5. An energy storage system (10) in accordance with at least one of the preceding claims,
**characterized in that**
the energy storage system (10) is only passively cooled.

6. An energy storage system (10) in accordance with at least one of the preceding claims,
**characterized in that**
the operating pattern comprises statistics, with the statistics of the operating pattern indicating the times in the future at which and the probability with which a respective state of charge of the energy store is present and/or whether a discharge or a charge of the energy store takes place at these times.

7. An energy storage system (10) in accordance with claim 6,
**characterized in that**
the control unit (11) is configured to define a maximum adaptation time period and/or a minimal adaptation probability, wherein no adaptation of the new storage cell (28) and/or of the remaining storage cells (26) takes place when it can be foreseen on the basis of the temporal operating pattern that the state of charge of the new storage cell (28) and of the remaining storage cells (26) will be substantially the same with a probability above the minimal adaptation probability within the maximum adaptation time period.

8. An energy storage system (10) in accordance with at least one of the preceding claims,
**characterized in that**
the control unit (11) is configured to electrically disconnect the storage cell (26a) to be removed from the remaining storage cells (26) when the storage cell (26) to be removed has a predefined state of charge and/or when the energy storage system (10) releases or draws less than a predefined electrical power; and/or **in that**
a reserve storage cell is provided in the energy storage system and replaces the disconnected storage cell (26a).

9. An energy storage system (10) in accordance with at least one of the preceding claims,
**characterized in that**
at least some of the storage cells (26, 26a) are connected in series, with the storage cell (26a) to be removed being bridged by means of a bypass line (29) after the disconnection of the storage cell (26a) to be removed, with the bypass line (29) preferably having the same resistance as the storage cell (26a) to be removed.

10. An energy storage system (10) in accordance with at least one of the preceding claims,
**characterized in that**
the storage cell (26a) to be removed and/or the new storage cell (28) can be disconnected from the remaining storage cells and can be connected to the remaining storage cells (26) by means of an electrical switching element (27), with at least some of the storage cells (26) preferably comprising a separate switching element (27), and with
the electrical switching element (27), for example, comprising a semiconductor switch and/or an ohmic resistor and/or a DC/DC converter and/or two inductively coupled coils, with a separate electrical switching element (27) preferably being associated with each storage cell (26, 26a, 28).

11. A method of replacing a storage cell (26, 26a, 28) of an energy storage system (10), wherein the energy storage system (10) comprises an energy store having a plurality of electrical storage cells (26, 26a, 28) which are organized in storage modules (14), wherein
- it is recognized whether at least one storage cell (26, 26a) should be removed;
- the storage cell (26a) to be removed is electrically disconnected from the remaining storage cells (26) after the recognition that at least one storage cell (26, 26a) should be removed;
- it is recognized whether the disconnected storage cell (26a) has been replaced by a new storage cell (28);
- the new storage cell (28) is electrically connected to the remaining storage cells (26);
- a temporal operating pattern of the energy storage system (10) is determined, with an input power, an output power and the state of charge of the storage cells (26, 26a) being determined over time for the operating pattern;
- the state of charge of the new storage cell (28) is adapted by charging to the state of charge of the remaining storage cells (26) before or on the electrical connection of the new storage cell (28) to the remaining storage cells (26); the speed of the adaptation of the state of charge is set in dependence on the dissipation loss arising on the adaptation;
and/or wherein the state of charge of the remaining storage cells (26) is adapted by charging to the state of charge of the new storage cell (28) before or on the electrical connection of the new storage cell (28) to the remaining storage cells (26), wherein the speed of the adaptation of the state of charge is set in dependence on the dissipation loss arising on the adaptation.

12. An energy storage system (10) for a repeated intake, storage and release of electrical energy, comprising
a control unit and an energy store comprising a plurality of electrical storage cells (26, 26a, 28) which are organized in storage modules (14), wherein the control unit (11) is configured to separately determine the state of charge of at least some of the storage cells (26, 26a, 28), wherein
the control unit (11) is configured
- to recognize whether a new storage cell (28) should be added to the energy store;
- to electrically connect the new storage cell (28) to the remaining storage cells (26);
- to determine a temporal operating pattern of the energy storage system (10), with an input power, an output power and the state of charge of the storage cells (26, 26a) being determined over time for the operating pattern;
- before or on the electrical connection of the new storage cell (28) to the remaining storage cells (26),
to adapt the state of charge of the new storage cell (28) by charging to the state of charge of the remaining storage cells (26), wherein the control unit (11) is configured to set the speed of the adaptation of the state of charge in dependence on the dissipation loss arising on the adaptation, and/or to adapt the state of charge of the remaining storage cells (26) by charging to the state of charge of the new storage cell (28), wherein the control unit (11) is configured to set the speed of the adaptation of the state of charge in dependence on the dissipation loss arising on the adaptation.

## Revendications

1. Système de stockage d'énergie (10) servant à absorber, stocker et fournir de manière répétée de l'énergie électrique, comportant
une unité de commande et un dispositif de stockage d'énergie comprenant une pluralité de cellules de stockage électriques (26, 26a, 28) qui sont divisées en modules de stockage (14), l'unité de commande (11) étant conçue pour déterminer séparément l'état de charge d'au moins une partie des cellules de stockage (26, 26a, 28),
l'unité de commande (11) étant conçue pour :
- détecter si au moins une cellule de stockage (26, 26a) doit être retirée,
- après avoir détecté qu'au moins une cellule de stockage (26, 26a) doit être retirée, déconnecter électriquement la cellule de stockage à retirer (26a) des cellules de stockage restantes (26),
- détecter si la cellule de stockage déconnectée (26a) a été remplacée par une cellule de stockage neuve (28),
- connecter électriquement la cellule de stockage neuve (28) aux cellules de stockage restantes (26),
l'unité de commande (11) étant conçue pour déterminer un schéma de fonctionnement dans le temps du système de stockage d'énergie (10), une puissance d'entrée, une puissance de sortie et l'état de charge des cellules de stockage (26, 26a) dans le temps étant déterminés pour le schéma de fonctionnement,
l'unité de commande (11) étant conçue, avant ou pendant la connexion électrique de la cellule de stockage neuve (28) aux cellules de stockage restantes (26), pour adapter l'état de charge de la cellule de stockage neuve (28) à l'état de charge des cellules de stockage restantes (26) en la chargeant, l'unité de commande (11) étant conçue pour régler la vitesse de l'adaptation de l'état de charge en fonction de la perte de puissance apparaissant lors de l'adaptation, et/ou que
l'unité de commande (11) est conçue, avant ou pendant la connexion électrique de la cellule de stockage neuve (28) aux cellules de stockage restantes (26), pour adapter l'état de charge des cellules de stockage restantes (26) à l'état de charge de la cellule de stockage neuve (28) en les chargeant, l'unité de commande (11) étant conçue pour régler la vitesse de l'adaptation de l'état de charge en fonction de la perte de puissance apparaissant lors de l'adaptation.

2. Système de stockage d'énergie (10) selon la revendication 1,
**caractérisé en ce que**
pour l'adaptation de l'état de charge, les cellules de stockage sont, au moins en partie, chaque fois connectées électriquement aux cellules de stockage restantes au moyen d'un élément de commutation d'adaptation (27).

3. Système de stockage d'énergie (10) selon l'une des revendications 1 à 2,
**caractérisé en ce que**
l'unité de commande (11) est conçue pour déterminer une perte de puissance dissipée momentanée du système de stockage d'énergie (10) et pour sélectionner la vitesse de l'adaptation de l'état de charge de telle sorte qu'une perte de puissance dissipable maximale du système de stockage d'énergie (10) ne soit pas dépassée.

4. Système de stockage d'énergie (10) selon au moins l'une des revendications précédentes,
**caractérisé en ce que**
l'unité de commande (11) est conçue pour réduire la puissance électrique fournie ou absorbée par le système de stockage d'énergie (10), en particulier en dessous d'une valeur seuil prédéterminée, avant de déconnecter la cellule de stockage (26a) à retirer.

5. Système de stockage d'énergie (10) selon au moins l'une des revendications précédentes,
**caractérisé en ce que**
le système de stockage d'énergie (10) est refroidi exclusivement de manière passive.

6. Système de stockage d'énergie (10) selon au moins l'une des revendications précédentes,
**caractérisé en ce que**
le schéma de fonctionnement comprend une statistique, la statistique du schéma de fonctionnement indiquant à quels instants dans le futur et avec quelle probabilité un état de charge respectif du dispositif de stockage d'énergie sera présent et/ou si une décharge ou une charge du dispositif de stockage d'énergie aura lieu à ces instants.

7. Système de stockage d'énergie (10) selon la revendication 6,
**caractérisé en ce que**
l'unité de commande (11) est conçue pour définir une période d'adaptation maximale et/ou une probabilité d'adaptation minimale, aucune adaptation de la cellule de stockage neuve (28) et/ou des cellules de stockage restantes (26) n'ayant lieu s'il est prévisible, sur la base du schéma de fonctionnement dans le temps, avec une probabilité supérieure à la probabilité d'adaptation minimale pendant la période d'adaptation maximale, que l'état de charge de la cellule de stockage neuve (28) et des cellules de stockage restantes (26) sera sensiblement le même.

8. Système de stockage d'énergie (10) selon au moins l'une des revendications précédentes,
**caractérisé en ce que**
l'unité de commande (11) est conçue pour déconnecter électriquement la cellule de stockage à retirer (26a) des cellules de stockage restantes (26) lorsque la cellule de stockage à retirer (26a) présente un état de charge prédéterminé et/ou lorsque le système de stockage d'énergie (10) fournit ou absorbe moins qu'une puissance électrique prédéterminée, et/ou qu'une cellule de stockage de réserve est prévue dans le système de stockage d'énergie, laquelle remplace la cellule de stockage déconnectée (26a).

9. Système de stockage d'énergie (10) selon au moins l'une des revendications précédentes,
**caractérisé en ce que**
les cellules de stockage (26, 26a) sont, au moins en partie, montées en série, la cellule de stockage à retirer (26a) étant court-circuitée au moyen d'une ligne de dérivation (29) après la déconnexion de la cellule de stockage à retirer (26a), la ligne de dérivation (29) présentant de préférence la même résistance que la cellule de stockage à retirer (26a).

10. Système de stockage d'énergie (10) selon au moins l'une des revendications précédentes,
**caractérisé en ce que**
la cellule de stockage à retirer (26a) et/ou la cellule de stockage neuve (28) peut être déconnectée des cellules de stockage restantes et connectée aux cellules de stockage restantes (26) au moyen d'un élément de commutation électrique (27),
les cellules de stockage (26) comprenant de préférence, au moins en partie, leur propre élément de commutation (27) et
l'élément de commutation électrique (27) comprenant par exemple un commutateur à semi-conducteur et/ou une résistance ohmique et/ou un convertisseur continu/continu et/ou deux bobines couplées par induction, à chaque cellule de stockage (26, 26a, 28) étant de préférence associée son propre élément de commutation électrique (27).

11. Procédé de remplacement d'une cellule de stockage (26, 26a, 28) d'un système de stockage d'énergie (10), le système de stockage d'énergie (10) comprenant un dispositif de stockage d'énergie comportant une pluralité de cellules de stockage électriques (26, 26a, 28) qui sont divisées en modules de stockage (14), le procédé comprenant les étapes consistant à :
- détecter si au moins une cellule de stockage (26, 26a) doit être retirée,
- après avoir détecté qu'au moins une cellule de stockage (26, 26a) doit être retirée, déconnecter électriquement la cellule de stockage à retirer (26a) des cellules de stockage restantes (26),
- détecter si la cellule de stockage déconnectée (26a) a été remplacée par une cellule de stockage neuve (28),
- connecter électriquement la cellule de stockage neuve (28) aux cellules de stockage restantes (26),
- déterminer un schéma de fonctionnement dans le temps du système de stockage d'énergie (10), une puissance d'entrée, une puissance de sortie et l'état de charge des cellules de stockage (26, 26a) dans le temps étant déterminés pour le schéma de fonctionnement,
- avant ou pendant la connexion électrique de la cellule de stockage neuve (28) aux cellules de stockage restantes (26), adapter l'état de charge de la cellule de stockage neuve (28) à l'état de charge des cellules de stockage restantes (26) en la chargeant, la vitesse de l'adaptation de l'état de charge étant réglée en fonction de la perte de puissance apparaissant lors de l'adaptation
et/ou, avant ou pendant la connexion électrique de la cellule de stockage neuve (28) aux cellules de stockage restantes (26), adapter l'état de charge des cellules de stockage restantes (26) à l'état de charge de la cellule de stockage neuve (28) en les chargeant, la vitesse de l'adaptation de l'état de charge étant réglée en fonction de la perte de puissance apparaissant lors de l'adaptation.

12. Système de stockage d'énergie (10) servant à absorber, stocker et fournir de manière répétée de l'énergie électrique, comportant
une unité de commande et un dispositif de stockage d'énergie comprenant plusieurs cellules de stockage électriques (26, 26a, 28) qui sont divisées en modules de stockage (14), l'unité de commande (11) étant conçue pour déterminer séparément l'état de charge d'au moins une partie des cellules de stockage (26, 26a, 28),
l'unité de commande (11) étant conçue pour :
- détecter si une cellule de stockage neuve (28) doit être ajoutée au dispositif de stockage d'énergie,
- connecter électriquement la cellule de stockage neuve (28) aux cellules de stockage restantes (26),
- déterminer un schéma de fonctionnement dans le temps du système de stockage d'énergie (10), une puissance d'entrée, une puissance de sortie et l'état de charge des cellules de stockage (26), 26a) dans le temps étant déterminés pour le schéma de fonctionnement,
- avant ou pendant la connexion électrique de la cellule de stockage neuve (28) aux cellules de stockage restantes (26), adapter l'état de charge de la cellule de stockage neuve (28) à l'état de charge des cellules de stockage restantes (26) en la chargeant, l'unité de commande (11) étant conçue pour régler la vitesse de l'adaptation de l'état de charge en fonction de la perte de puissance apparaissant lors de l'adaptation et/ou adapter l'état de charge des cellules de stockage restantes (26) à l'état de charge de la cellule de stockage neuve (28) en les chargeant, l'unité de commande (11) étant conçue pour régler la vitesse de l'adaptation de l'état de charge en fonction de la perte de puissance apparaissant lors de l'adaptation.
